**Europäisches Patentamt**

**European Patent Office**

**Office européen des brevets**

(19)

(11) Veröffentlichungsnummer: **0 139 287**
A2

(12) # EUROPÄISCHE PATENTANMELDUNG

(21) Anmeldenummer: **84112339.1**

(22) Anmeldetag: **13.10.84**

(51) Int. Cl.⁴: **B 65 G 39/20**
B 65 G 19/30, B 65 G 17/38
B 65 G 21/20

(30) Priorität: **27.10.83 CH 5824/83**

(43) Veröffentlichungstag der Anmeldung:
**02.05.85 Patentblatt 85/18**

(84) Benannte Vertragsstaaten:
**AT CH DE FR GB IT LI NL SE**

(71) Anmelder: **Ferag AG**

**CH-8340 Hinwil(CH)**

(72) Erfinder: **Reist, Walter**
**Schönenbergstrasse 16**
**CH-8340 Hinwil(CH)**

(74) Vertreter: **Patentanwälte Schaad, Balass, Sandmeier,**
**Alder**
**Dufourstrasse 101 Postfach**
**CH-8034 Zürich(CH)**

(54) Stetigförderer.

(57) Es ist ein endloses, umlaufend angetriebenes, mit Mitnehmern (13) bestücktes und mittels einer Schiene (12) geführtes Fördermittel (20) vorgesehen. Um die bewegte Masse des Stetigförderers zu verringern und zugleich die Reibung zwischen Fördermittel und Schiene (12) auf ein Mindestmass herabzusetzen, sind zwischen der Schiene (12) und dem Fördermittel (20) zwei einander gegenüberliegende Reihen von Wälzkörpern (30) angeordnet, die sich sowohl am Fördermittel (20) als auch an der Schiene (12) abwälzen.

Fig.3

EP 0 139 287 A2

# STETIGFOERDERER

Die Erfindung betrifft einen Stetigförderer gemäss dem Oberbegriff des Patentanspruches 1.

Ein solcher Stetigförderer ist beispielsweise aus der FR-PS 2 064 235 in seiner Anwendung als Breithalter für Textilbahnen bekannt. Bei diesem Stetigförderer besitzen die Laufbahnen, und zwar sowohl die fördermittelseitigen als auch die schienenseitigen Laufbahnen einen kreisbogenförmigen Querschnitt, dessen Radius dem Radius der Kugeln entspricht.

Dies hat zur Folge, dass beim Abwälzen der Kugeln in den Laufbahnen eine "Mischreibung" entsteht, denn die Kugeln wälzen sich nicht entlang einer längs der Schiene verlaufenden Linie ab, sondern berühren die Laufbahnen entlang eines mehr oder weniger langen Kreisbogens. Ausserdem sind - namentlich in jenen Abschnitten, in denen die Schiene einen gekrümmten Verlauf hat - die schienenseitigen Laufbahnen entsprechend der Krümmung des Verlaufes etwas weiter voneinander anzuordnen als in jenen Abschnitten, in denen die Schiene einen geraden Verlauf hat. Es sind also je nach Verlauf der Schiene verschiedene Abstände der schienenseitigen Laufbahnen vorzusehen und für diese Abstände gelten darüberhinaus vergleichsweise enge Toleranzen.

Es ist daher eine Aufgabe der Erfindung, einen Stetigförderer der eingangs genannten Art derart auszubilden, dass in Betrieb zwischen dem Fördermittel und der Schiene im wesentlichen nur Rollreibung entsteht und dass für den Abstand der schienenseitigen Laufbahnen grössere Toleranzen zugestanden werden können.

Zur Lösung dieser Aufgabe weist der vorgeschlagene Stetigförderer die im Kennzeichen des Patentanspruches 1 angegebenen Merkmale auf.

Dadurch ist sichergestellt, dass die Kugeln sowohl in den schienenseitigen als auch in den fördermittelseitigen Laufbahnen sich auf Linien abwälzen, die entlang dem Verlauf der Schiene verlaufen. Ausserdem können für den Abstand der schienenseitigen Laufbahnen voneinander grössere Toleranzen zugestanden werden. Je nach räumlichem Verlauf der Schiene ist es dabei entweder die eine Reihe von Kugeln, die belastet ist, während die andere lediglich Führungsfunktionen ausübt, oder es sind beide Reihen der Kugeln belastet. In der Wahl des Verlaufes der Schiene besteht eine grosse Freiheit, die lediglich durch die Grenzen der Biegsamkeit des Fördermittels begrenzt ist.

Merkmale bevorzugter Ausführungsformen sind in den abhängigen Ansprüchen definiert.

Nachstehend ist die Erfindung rein beispielsweise anhand der Zeichnung näher erläutert. Es zeigt bzw. zeigen:

Fig. 1 und 2 — in schematischer Seiten- bzw. Draufsicht vor allem den Verlauf eines Stetigförderers,

Fig. 3 — einen Querschnitt längs der Linie III-III der Fig. 4 durch eine erste Ausführungsform,

Fig. 4 — eine Draufsicht auf einen Teil der Ausführungsform der Fig. 3,

Fig. 5 — eine Ausführungsvariante der Ausführungsform der Fig. 4,

Fig. 6 — die Ausführungsform der Fig. 5 beim Beschreiben eines Seitenbogens,

Fig. 7 — einen Längsschnitt durch einen Teil des Fördermittels einer weiteren Ausführungsform,

Fig. 8 — einen Querschnitt durch die Schiene mit dem Fördermittel gemäss Fig. 7, wobei der Schnitt längs der Linie VIII-VIII der Fig. 9 geführt ist,

Fig. 9 — eine Draufsicht auf die Ausführungsform der Fig. 8, und

Fig. 10 - 13 — schematische Querschnitte durch weitere Ausführungsformen.

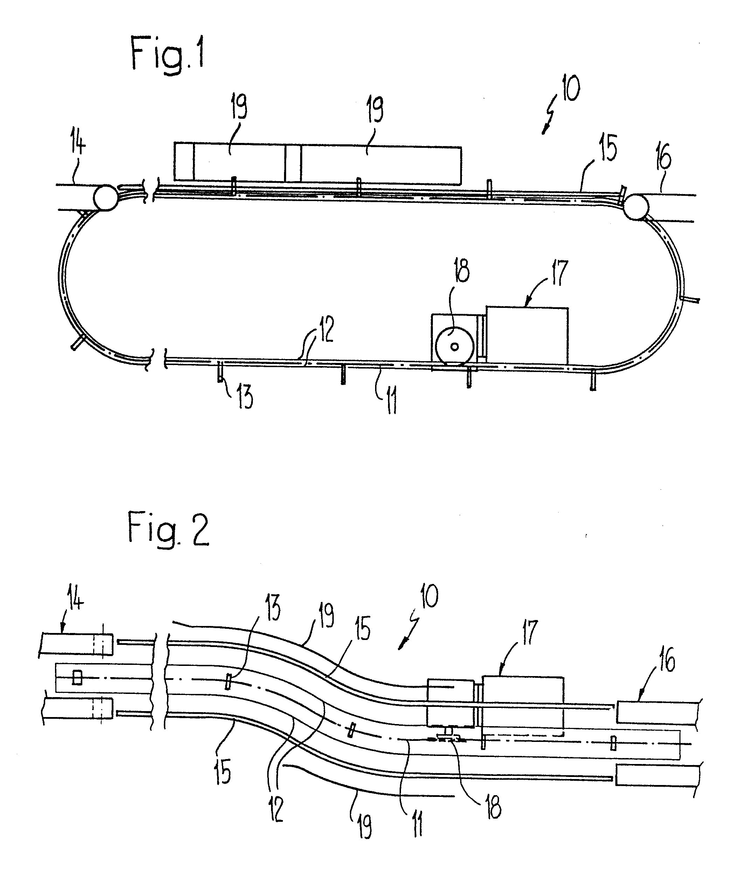

Bei dem in Fig. 1 und 2 dargestellten Stetigförderer 10 ist das endlose Fördermittel mit der strichpunktierten Linie 11 und eine das Fördermittel führende Schiene mit den ausgezogenen, beidseits der Linie 11 verlaufenden Linien 12 angedeutet. Das Fördermittel 11 ist mit nur schematisch angegebenen Mitnehmern 13 bestückt. Diese Mitnehmer können beispielsweise gesteuerte Greifer oder abstehende Anschläge sein.

Das förderaktive Trum (oben in Fig. 1) des Stetigförderers 10 beginnt im Anschluss an einen Zuförderer 14 in Form eines Bändchenförderers, ist zu beiden Seiten von Gleitschienen 15 flankiert, die dazu dienen, von den Mitnehmern 13 erfasstes Stückgut (nicht gezeigt) abzustützen, und endet schliesslich an einem Wegförderer 16.

Im Bereich des rücklaufenden Trums (Fig. 1 unten) ist eine Antriebseinheit 17, beispielsweise ein Getriebemotor, angeordnet, dessen Abtriebsrad 18 das Fördermittel 11 antreibt.

Der Fig. 2 ist zu entnehmen, dass der Verlauf des dargestellten Stetigförderers 10 nicht nur die in Vertikalebenen liegenden Kurven zwischen dem förderaktiven und dem rücklaufenden Trum beschreibt, sondern auch in beiden Trumen je eine in einer Horizontalebene liegende S-Kurve. Daher sind im Bereiche des förderaktiven Trums seitlich der Gleitschienen 15 und zumindest auf der Aussenseite des jeweiligen Kurvenabschnittes Leitbleche 19 angeordnet, um das geförderte Stückgut zu veranlassen, dem Verlauf des Stetigförderers 10 zu folgen.

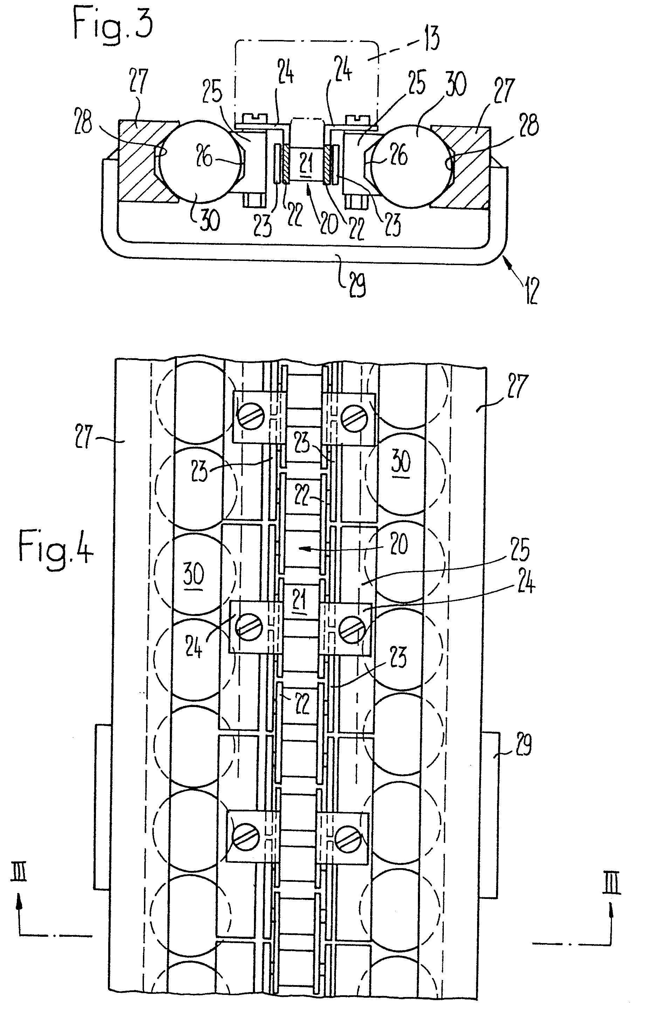

Das bisher Gesagte gilt im wesentlichen ganz allgemein für Stetigförderer der eingangs genannten Art. Anhand der Fig. 3 bis 13 ist nachstehend der Aufbau einiger Ausführungsformen des erfindungsgemässen Stetigförderers beschrieben.

Gemäss Fig. 3 und 4 ist das Fördermittel durch eine Rollenlenkette 20 gebildet. Diese weist in regelmässigen Abständen voneinander angeordnete und durch Zapfen durchsetzte Rollen 21 auf, die paarweise miteinander mittels inneren Laschen 22 verbunden sind. Jedes Paar dieser Rollen 21 ist mit dem benachbarten Paar durch äussere Laschen 23 verbunden, wobei die Laschen 22 und 23 ebenfalls um die die Rollen 21 durchsetzenden Zapfen drehbar sind. Jede zweite der inneren Laschen 22 ist mit einer rechtwinklig von der Kette 20 abstehenden und L-förmig gebogenen Verlängerung 24 versehen, an der je ein Führungssegment 25 mittels einer Schraube verankert ist. Jedes Führungssegment 25 weist eine Laufbahn 26 auf, deren Profil die Form eines abgestumpften V hat. Der Fig. 4 ist zu entnehmen, dass zwischen aufeinander folgenden Führungssegmenten 25 ein geringer Abstand vorhanden ist.

Die Schiene 12 weist bei diesem Ausführungsbeispiel zu beiden Seiten der Kette je eine den gesamten Verlauf des Stetigförderers beschreibende Führungsbahn 27 auf. Diese Führungsbahnen 27 weisen an ihren den Führungssegmenten 25 zugekehrten Seiten eine Laufbahn 28 auf, deren Profil zum Profil der Laufbahnen 26 in den Führungssegmenten 25 ähnlich ist.

Die beiden Führungsbahnen 27 sind miteinander durch in regelmässigen Abständen angeordnete und an den Führungsbahnen 27 selbst verankerte Abstandshalter oder Bügel 29 verbunden.

Zwischen der Führungsbahn 27 und den Führungssegmenten 25 auf der einen Seite der Kette 20 und zwischen der Führungsbahn 27 und den Führungssegmenten 25 auf der anderen Seite der Kette ist je eine Reihe von Kugeln 30 vorhanden, die sich beim Bewegen der Kette 20 in den Laufbahnen 26 und 28 abwälzen. Dabei bewegen sich die Kugeln 30 gleichsinnig wie die Kette 20, jedoch nur etwa mit halber Geschwindigkeit, wenn ein schlupffreies Abwälzen angenommen wird. Die Länge der Führungssegmente 25 beträgt vorteilhaft mehr als das Doppelte des Durchmessers der Kugel 30, denn damit ist sichergestellt, dass jedes Führungssegment 25 stets an wenigstens zwei Kugeln 30 anliegt.

Obwohl bei der dargestellten Anordnung die Kugeln 30 nur durch die Führungssegmente 25 und die Führungsbahnen 27 gehalten sind, könnten zusätzlich Kugelkäfige oder Distanzstücke (nicht dargestellt) vorgesehen werden, um die Kugeln 30 in einem wohldefinierten Abstand voneinander zu halten und damit um beim Betrieb das Aufeinanderprallen benachbarter Kugeln zu verhindern.

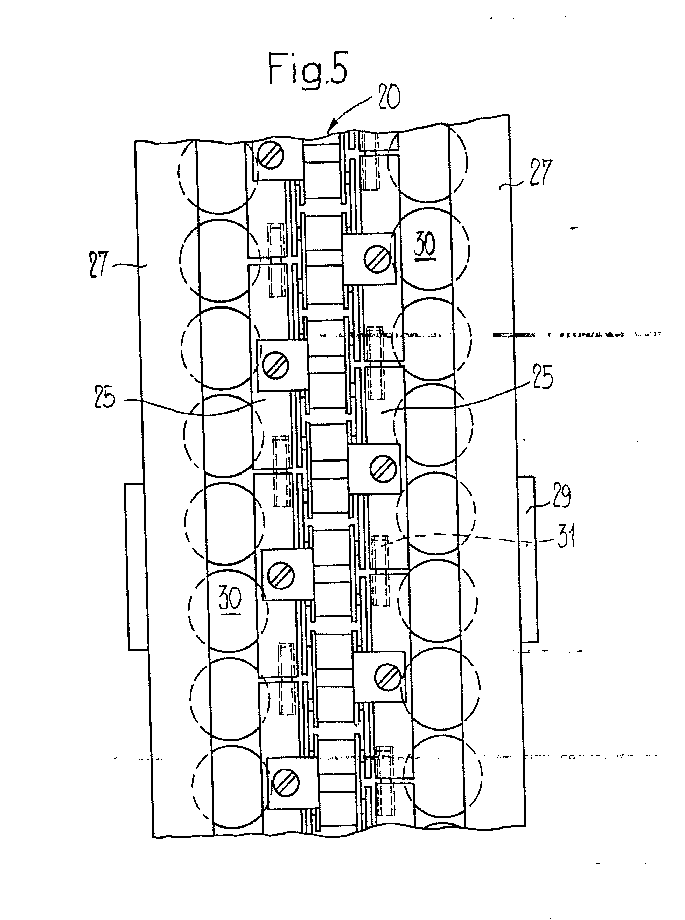

Die Ausführungsform der Fig. 5 unterscheidet sich von jener der Fig. 3 und 4 dadurch, dass die Führungssegmente 25 auf der einen Seite der Rollenkette 20 bezüglich der Führungssegmente 25 auf der anderen Seite um ein Mass versetzt angeordnet sind, das etwa ihrer halben Länge entspricht. Zusätzlich sind in Fig. 5 benachbarte Führungssegmente 25 stirnseitig lose mittels Stiften 31 aneinander gekoppelt. Die Stifte 31 greifen sowohl mit umfangsseitigem als auch axialem Spiel in Bohrungen in den einander zugekehrten Stirnseiten der Führungssegmente 25 ein. Anstelle der Stifte 31 kann zur Koppelung benachbarter Führungssegmente zwischen diesen auch ein biegsames und elastisch deformierbares Element, z.B. aus Gummi vorgesehen sein. Die Koppelung der Führungssegmente 25 aneinander dient im wesentlichen dazu, deren Laufbahnen 26 einigermassen miteinander fluchtend zu halten.

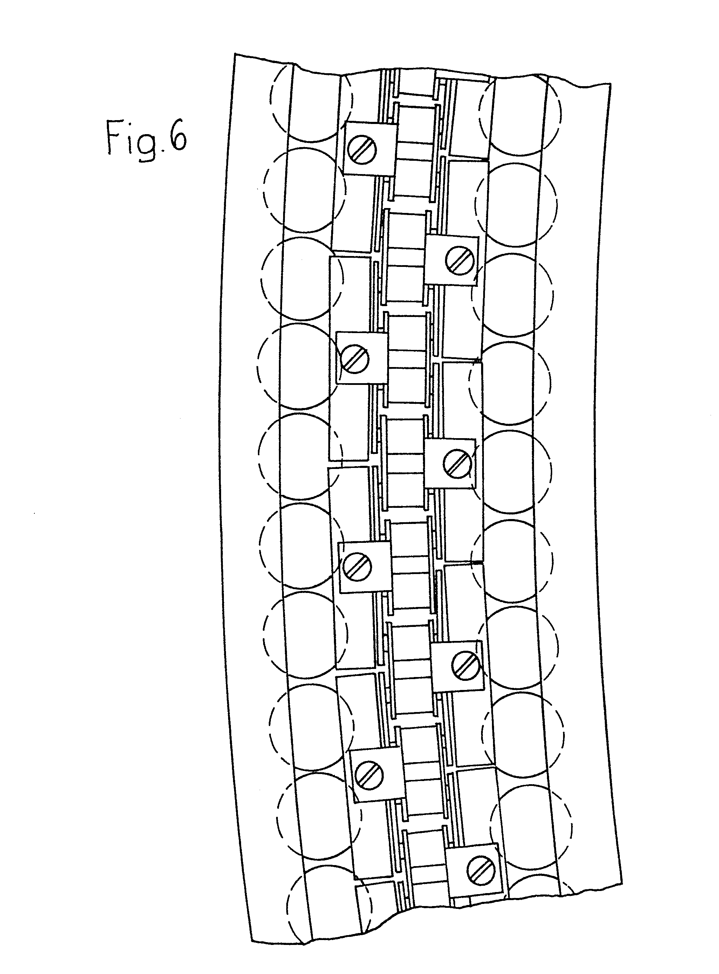

Aus Fig. 6 ist ersichtlich, dass der Stetigförderer dank dem geringen Abstand zwischen den aufeinanderfolgenden Führungssegmenten 25 und dem unvermeidlichen Spiel der Verbindungslaschen auf den Bolzen bzw. Buchsen der Rollenkette 20 auch einen in einer Ebene gekrümmten Verlauf haben kann, die rechtwinklig zu jener Ebene steht, die beispielsweise durch ein in die Rollenkette eingreifendes Kettenrad gegeben ist.

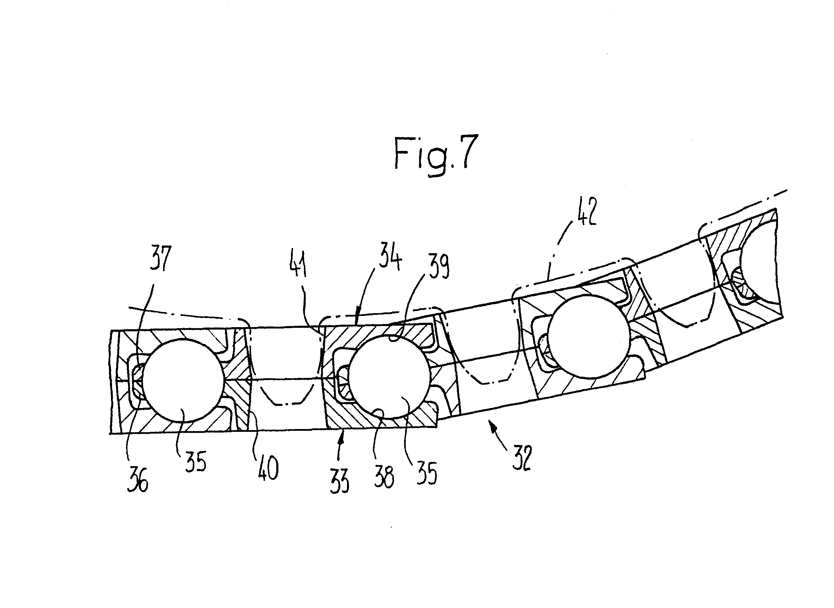

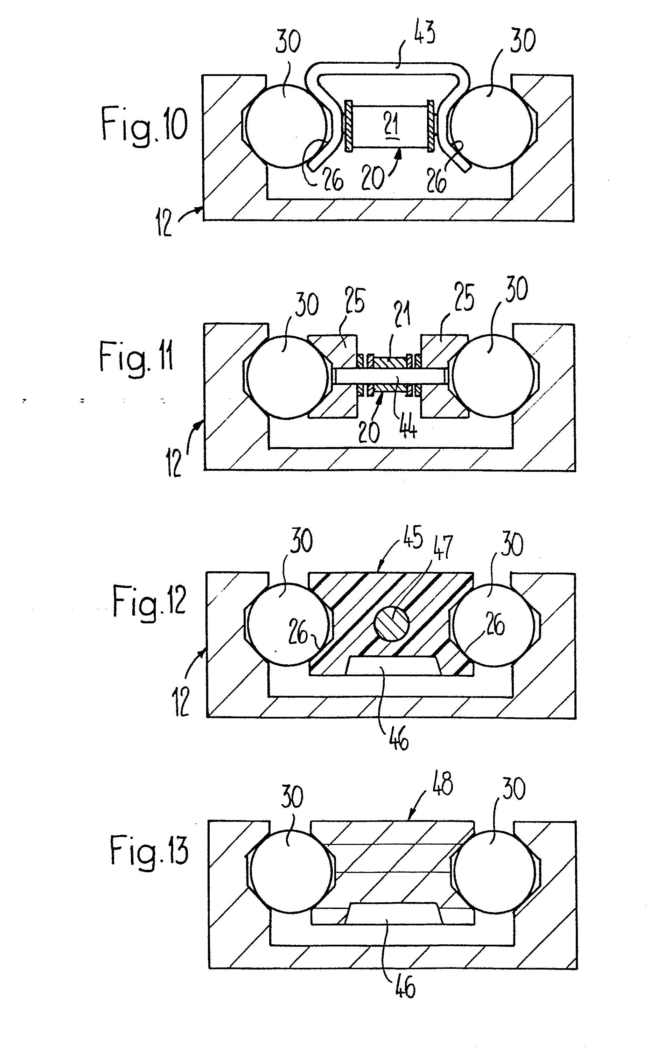

Bei der Ausführungsform der Fig. 7 bis 9 ist das Fördermittel eine Kugelgelenk-Gliederkette 32, deren Aufbau nachstehend beschrieben ist. Jedes Glied der Gliederkette 32 weist zwei identische, miteinander verschraubte (Fig. 9) Gliedhälften 33, 34 auf. Beide Gliedhälften weisen an ihrem einen Ende eine eine Gelenkkugel 35 "äquatorial" umschliessende Ringöse 36 bzw. 37 auf, und an ihrem anderen Ende eine die nächstfolgende Gelenkkugel 35 in der Art vom "Polkappen" erfassende Kugelpfanne 38 bzw. 39. Zwischen der Ringöse 36 bzw. 37 und der Kugelpfanne 38 bzw. 39 weist jede der Gliedhälften 33, 34 eine durchgehende Oeffnung 40 bzw. 41 auf, die einen viereckigen, leicht konvergierenden Querschnitt hat. Diese durchgehende Oeffnung dient zum Antrieb der Kette 32, wozu ein Kettenrad 42 dienen kann, wie strichpunktiert in Fig. 7 angedeutet ist.

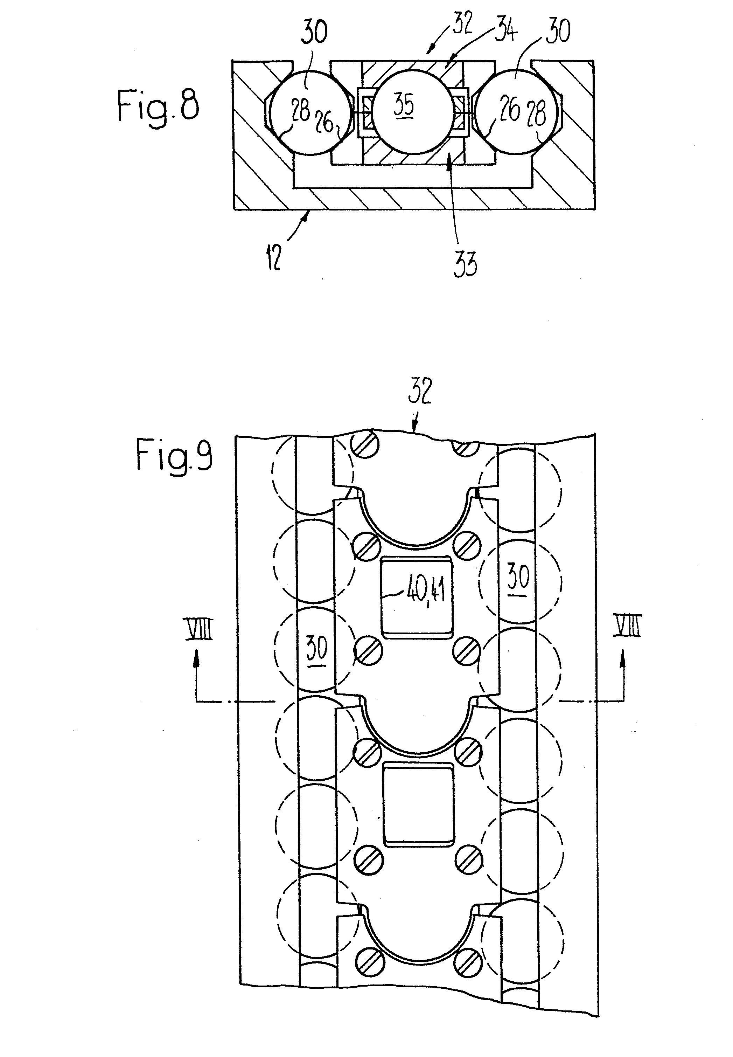

Die seitlichen Flanken der Gliedhälften 33, 34 sind, wie der Fig. 8 zu entnehmen ist, profiliert, so dass wenn die Gliedhälften miteinander verschraubt sind, die kettenseitige Laufbahn 26 für die Kugeln 30 gebildet ist. Wiederum ist die Länge der Gliedhälften 33, 34 so gewählt, dass die Laufbahnen 26 länger sind als das Doppelte des Durchmessers der Kugeln 30.

Die schienenseitigen Laufbahnen 28 sind bei dieser Ausführungsform in den einander zugekehrten Seiten der Schenkel der hier im wesentlichen U-förmigen und einstückigen Schiene 12 ausgebildet. Da die Kette 32 räumlich einem beliebigen Verlauf folgen kann und sich auch verwinden lässt, ist der Stetigförderer gemäss den Fig. 7 bis 9 besonders für räumlich komplizierte Verläufe geeignet.

Bei der nun schematisch dargestellten Ausführungsform der Fig. 10 ist das Fördermittel wieder durch eine Rollenkette 20 gebildet. Die äusseren Verbindungslaschen sind durch einen die Rollen 21 portalartig überspannenden Bügel 43 ersetzt, dessen Schenkel als äussere Verbindungslasche dienen und ausserdem so profiliert sind, dass sie zugleich eine kettenseitige Laufbahn 26 für die Kugeln 30 bilden. Es ist auch möglich, anstelle des Bügels 43, wie in Fig. 10 dargestellt, nur den äusseren Verbindungslaschen die Form eines nach der Seite der Kette 20 hin offenen abgestumpften V zu geben, so dass jede dieser Verbindungslaschen für sich einen Abschnitt der kettenseitigen Laufbahn 26 bilden. Mit anderen Worten ist es möglich, den zwischen den punktierten Linien im Bügel 43 der Fig. 10 befindlichen Teil desselben wegzulassen.

Bei der Ausführungsform der Fig. 11 ist das Fördermittel ebenfalls durch die Rollenkette 20 gebildet. Die Führungssegmente 25 sind hier nicht an den Verbindungslaschen zwischen den Rollen 21 befestigt, sondern auf einem zu beiden Seiten der Kette abstehenden Bolzen 44, auf dem eine der Rollen 21 und die betreffenden Verbindungslaschen der Rollenkette drehbar gelagert sind.

Bei der Ausführungsform der Fig. 12 ist das Fördermittel durch einen Zahnriemen 45 gebildet. Dieser weist eine mit 46 bezeichnete Verzahnung für den Antrieb auf und an seinen Schmalseiten je eine Hohlkehle, die die Laufbahn 26 für die Kugeln 30 bildet. Der Zahnriemen 45 kann, wie dargestellt, zur Verringerung seiner Dehnung im Betrieb eine Seele, z.B. in Form eines Drahtseiles 47 aufweisen. Ebenso kann der Zahnriemen 45 aus zwei Profilriemen aufgebaut sein, die innig miteinander verbunden sind, wie gestrichelt in Fig. 12 angedeutet.

Bei der Ausführungsform der Fig. 13 ist als Fördermittel ein massiver "Zahnriemen" 48 aus einem biegsamen Kunststoff vorgesehen. Dieser kann endlos sein oder aus stirnseitig aneinanderstossenden, einzelnen biegsamen Profilstäben, deren Querschnitt dem Querschnitt des Zahnriemens 45 der Fig. 12 entspricht.

Bei einer weiteren Ausführungsform, die in der Zeichnung nicht ausführlich dargestellt ist, die man sich jedoch anhand der Fig. 12 leicht vorstellen kann, ist das Fördermittel ein Verbundgebilde, das wie folgt aufgebaut ist. Auf einer (oder mehreren) Saiten aus einem zugfesten Material (ähnlich zur Seele 47 in Fig. 12) ist in der Art einer Perlschnur eine Vielzahl von quer zu der bzw. den Saiten verlaufenden Lamellen aufgezogen, deren Umriss etwa dem Querschnitt der in Fig. 12 und 13 gezeigten Riemen 45 bzw. 48 entspricht. Die Stirnflächen dieser Lamellen, also die quer zu der bzw. den Saiten stehenden Flächen sind vorteilhaft etwas bombiert, und stossen aneinander. Damit ergibt die in sich geschlossene Flucht der Lamellen, die vorzugsweise aus einem Kunststoff bestehen, die fördermittelseitige Laufbahn für die Kugeln 30. Wenn für diese Lamellen ein begrenzt kompressibler Kunststoff gewählt wird, dann erübrigt sich, deren Stirnflächen bombiert auszubilden. Bei dieser Ausführungsform ist die fördermittelseitige Laufbahn 26 nicht wie bei den Ausführungsformen der Fig. 3 bis 11 in vergleichsweise lange Segmente unterteilt und auch nicht, wie in den Fig. 12 und 13 praktisch ununterbrochen, vielmehr ist beim lamellierten Fördermittel dieser Ausführungsform die fördermittelseitige Laufbahn in eine Vielzahl von im Vergleich zu den Abmessungen der Kugeln sehr kurzen Segmenten aufgeteilt, so dass im Betrieb jede Kugel nur während kürzester Zeit mit nur einem dieser Segmente in Berührung ist un sich im übrigen aber ruhig über die lamellierte Laufbahn abwälzt. Auch diese Ausführungsform besitzt den Vorteil, dass dem Stetigförderer ein räumlich beliebiger Verlauf gegeben werden kann, der auch - sofern die zugehörige Schiene 12 dementsprechend geformt ist - Verwindungen aufweisen kann.

## PATENTANSPRUECHE

1. Stetigförderer mit einem endlosen, umlaufend angetriebenen, mit Mitnehmern (13) bestückten und mittels einer Schiene (12) geführten, biegsamen Fördermittel (11), wobei zwischen der im Querschnitt im wesentlichen U-förmigen Schiene (12) und dem Fördermittel (11) zwei einander gegenüberliegende Reihen von Kugeln (30) angeordnet sind, die in sowohl am Fördermittel (11) als auch an der Schiene (12) vorhandenen Laufbahnen (26 bzw. 28) abrollen, dadurch gekennzeichnet, dass die Laufbahnen (26, 28) ein Querschnittsprofil in der Form eines abgestumpften V aufweisen.

2. Stetigförderer nach Patentanspruch 1, bei dem das Fördermittel (11) durch eine Kette (20) gebildet ist, wobei die fördermittelseitige Laufbahn (26) in Segmente (25) unterteilt ist, die zu beiden Seiten der Kettenglieder angeordnet sind, dadurch gekennzeichnet, dass die Segmente (25) auf der einen Seite der Kette (20) inbezug auf jene auf der anderen Seite der Kette (20) versetzt angeordnet sind.

3. Stetigförderer nach Patentanspruch 2, dadurch gekennzeichnet, dass die Segmente (25) auf der einen Seite der Kette (20) um eine halbe Segmentlänge inbezug auf jene auf der anderen Seite der Kette (20) angeordnet sind.

4. Stetigförderer nach Patentanspruch 2, bei dem die Kette eine Rollenkette (20) ist, dadurch gekennzeichnet, dass die Segmente (25) je an einer Verbindungslasche (22) der Rollenkette oder an einem eine Rolle (21)

0130287

der Rollenkette durchsetzenden Zapfen (44) befestigt
sind.

0139287

## Fig.1

## Fig. 2

Fig.3

Fig.4

Fig.5

Fig.6

Fig.7

Fig.8

Fig.9

Fig.10

Fig.11

Fig.12

Fig.13